Europäisches Patentamt

European Patent Office

Office européen des brevets

(11) Publication number: **0 145 443**
**B1**

# (12) EUROPEAN PATENT SPECIFICATION

(45) Date of publication of patent specification: **07.03.90**

(51) Int. Cl.⁵: **B 60 R 13/06, B 60 J 1/00**

(21) Application number: **84308423.7**

(22) Date of filing: **04.12.84**

(54) **Method of moulding and bonding a gasket member onto a peripheral portion of a glass window.**

(30) Priority: **12.12.83 US 560549**

(43) Date of publication of application:
**19.06.85 Bulletin 85/25**

(45) Publication of the grant of the patent:
**07.03.90 Bulletin 90/10**

(84) Designated Contracting States:
**AT DE FR GB IT SE**

(56) References cited:
EP-A-0 076 924     GB-A-2 049 542
EP-A-0 145 354     GB-A-2 057 338
DE-A-2 117 523     GB-A-2 079 667
DE-A-2 544 749     GB-A-2 115 049
FR-A-1 374 552     GB-A-2 141 375
FR-A-2 157 189     US-A-4 072 340
FR-A-2 204 497     US-A-4 135 180
FR-A-2 266 582     US-A-4 139 234
FR-A-2 393 663

(73) Proprietor: **SHELLER-GLOBE CORPORATION**
**1505 Jefferson Avenue**
**Toledo Ohio 43624 (US)**

(72) Inventor: **Reilly, Albert Frederick**
**4730, Eager Road**
**Howell Michigan 48843 (US)**
Inventor: **Sanok, John Leo**
**28594 Chatham**
**Grosse Ile Michigan 48138 (US)**
Inventor: **Kremenski, John Joseph**
**5416, Glenridge Drive**
**Toledo Ohio 43614 (US)**

(74) Representative: **Williams, Trevor John et al**
**J.A. KEMP & CO. 14 South Square Gray's Inn**
**London WC1R 5EU (GB)**

(56) References cited:
A.T.Z. AUTOMOBILTECHNISCHE ZEITSCHRIFT,
vol. 85, no. 11, November 1983, page 678,
Schwäbisch Gmünd, DE; "Scheibenverklebung
mit Polyurethan"

Courier Press, Leamington Spa, England.

## Description

The invention relates to a method of moulding and bonding a window gasket member. More particularly, the invention relates to such gaskets for automotive applications and to equipment and methods of reaction injection molding of such articles, wherein the elastomeric urethane window gaskets are integrally molded and securely bonded onto a window panel of glass or other transparent material. Reference is made to the related copending applications GB—A—2 141 375 published on 18.12.1984 and EP—A—0 145 354 published on 19.06.1985, both of which are assigned to the same assignee as the present invention. The disclosures of said related copending applications are hereby incorporated herein by reference.

It has been known in the past to fabricate articles such as modular window gaskets for vehicular installations from materials such as polyvinylchloride (PVC) using conventional compression or injection molding techniques. Some of such window gaskets have been injection molded directly onto the window panel, which is made of glass or other substantially transparent material. The window and gasket assemblies have then been installed in a vehicle or other window frame with adhesives and/or with integrally molded fastener protrusions, as disclosed, for example, in United States Patent US—A—4 072 340 and US—A—4 139 234. It has been found, however, that window panel breakage has been unacceptably high in such prior processes because of the high pressures required in the injection molding processes and because of the hardness and rigidity of the mold structures involved. Additionally, because of the types of materials previously used in molding the gaskets, such as rubber or polyvinylchloride (PVC), it has been found that proper adhesion of such gaskets to metal body panels and to glass window panels has been difficult to attain, thereby resulting in water leaks, wind noise, and other related problems, as well as requiring the use of mechanical fasteners to secure the assemblies to the body panels.

In accordance with the present invention, a method of reaction injection moulding articles such as vehicular window gaskets are provided in order to overcome the above-discussed disadvantages. Such method allows window gaskets to be reaction injection moulded from multi-constituent liquid materials, such as urethane, for example, and to be moulded at relatively low pressures and securely bonded directly onto the glass or other transparent window panels. The gasket and window panel assemblies can then be mounted directly into a window opening in a body panel and secured thereto with adhesives without the need for mechanical fastener devices, thereby simplifying the installation process and making it better suited for robotic or other automated equipment. All or a portion of the preferably urethane gasket can also be coated with a pigmented decorative material in the mould cavity if desired.

GB—A—2 115 049 discloses a method in accordance with the prior art portion of claim 1. This prior art uses an injection moulding process with localised metal fixing means spaced about the periphery of the window panel, giving the drawbacks already referred to. The present invention, as characterised in claim 1, provides reaction injection moulding using a multi-constituent urethane material with the consequent ease of bonding and moulding under relatively low pressure conditions, extremely good adhesion being provided due to the use of the primer on the cleaned glass surface.

The gaskets according to the present invention may also be fabricated with a lower cross-sectional profile, thereby providing for a smooth aerodynamically advantageous fit between the window assembly and the body panel. Such lower profile also requires less offset or other forming of the body panel area surrounding the window opening, thus simplifying the body panel fabrication and increasing the design flexibility for such body panels. Also, because the gasket and window assembly is preferably bonded and secured to the body panel substantially continuously around the window opening periphery, the localised stress concentrations caused by spaced, discrete mechanical fasteners are substantially avoided and the bonding and securing forces are more evenly distributed. Such modular window structure, with its strong and preferably continuous, peripheral bond allows the window panel to effectively contribute to the structural integrity of the installation, and also to allow for a reduction in window panel thickness and weight.

The strong and secure bond between the preferably urethane gasket member and the preferably glass window panel is achieved by a novel method whereby the bonding occurs simultaneously with the molding process. Generally speaking the bonding method includes the steps of applying a primer material, by spraying or wiping, to at least the peripheral portions of the window panel, allowing the primer to air dry for a relatively short period of time, and inserting at least the peripheral portions into the mold cavity. The flowable urethane, or urethane-containing, material is then injected or otherwise introduced into the mold cavity where the gasket member is allowed to at least partially cure.

In a preferred embodiment of the present invention, an aftermixer apparatus for use in a reaction injection molding system includes a mixing body having at least one common inlet passageway for receiving a multi-constituent material in a pressurized flowable state. The apparatus includes a number of mixing passageways adapted to receive the material from the common inlet passageway and separate it into a corresponding number of material flow streams. A common mixing cavity in fluid communication with the mixing passageways reunites the separated flow streams and conveys the material into a gating device for introduction into the mold cavity. Adjustment means is provided for selectively altering the size of the common mixing cavity and the size of its inlets in order to selectively alter the back-pressure exerted on the material flowing therethrough. Such adjustment feature allows for the optimization of the back-pressure and thus the intermixing of the constituents of the material for a given flow rate and inlet pressure thereof. Preferably, the mixing passageways each extend along a generally serpentine path including at least one bight portion adapted to cause the material flowing therethrough to substantiall reverse its direction of flow in order to increase turbulence and enhance the mixing of the material constituents.

At least a portion of the preferred mold cavity of the reaction injection molding system includes one or more elongated elastomeric members positioned generally adjacent the peripheral edge of the mold cavity for supportingly engaging the mold members and the window panel. The flexible elongated elastomeric members are preferably seated in grooves in one or the other of the mold members and are further adapted to substantially minimize or prevent flashing of the gasket material out of the mold cavity and also serve to accommodate variations in the shape of the window panels.

The present invention will become apparent from the following description and appended claims, taken in conjunction with the accompanying drawings.

Figure 1 illustrates a portion of an exemplary vehicular window assembly, partially in cross-section, having a window gasket member integrally molded and securely bonded onto a transparent window panel in accordance with the present invention.

Figure 2 is a schematic diagram illustrating a reaction injection molding system for fabricating and bonding together the gasket and window panel assembly of Figure 1.

Figure 3 is a partial cross-sectional view of a mold and bonding apparatus for the molding system illustrated in Figure 2.

Figure 4 is a perspective view of an aftermixer and gating apparatus for a reaction injection molding apparatus in accordance with the present invention.

Figure 5 is a cross-sectional view taken along line 5—5 of Figure 4.

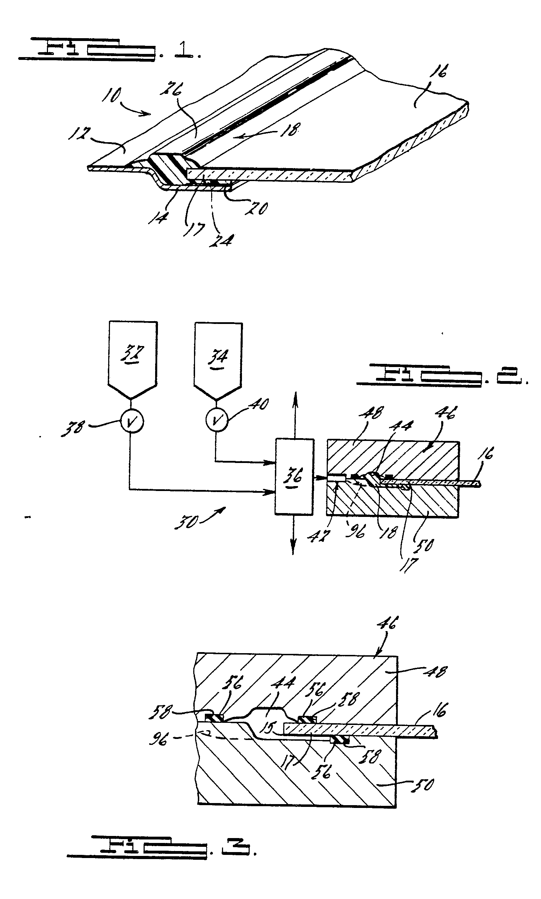

In Figures 1 through 5, exemplary embodiments of the present invention are illustrated for the reaction injection molding and bonding of integrally-molded vehicular window panel gaskets onto their associated glass or other transparent window panels. One skilled in the art will readily recognize from the following discussion, however, that the principles of the invention are equally applicable to reaction injection molding and bonding of items other than vehicular window gaskets, as well as being applicable to apparatus other than the reaction injection molding system shown in the drawings.

In Figure 1, a modular vehicular window assembly 10 generally includes a vehicle body or other panel 12 having a recessed portion 14 surrounding an opening for receiving a substantially transparent window panel therein. In the exemplary window assembly 10 illustrated in Figure 1, a transparent window panel 16, which is preferably glass, has a window gasket member 18 integrally molded and securely bonded thereon, with a peripheral portion 17 of the window panel substantially embedded or encased in the gasket member 18. The gasket and window panel assembly is secured to the recessed portion 14 by means of an adhesive material 20 without the need for mechanical fasteners protruding through apertures in the body panel. By eliminating the need for such fasteners, the cross-sectional profile of the gasket member 18 may be minimized in order to provide a smooth relatively unobstrusive fit with the body panel 12, thereby reducing the aerodynamic drag on the vehicle. Also, because the gasket member and window panel assembly is secured and bonded substantially continuously around its periphery, the window panel effectively becomes part of the body structure and is not subjected to the localized stress concentrations caused by discrete mechanical fasteners. Thus the window panel 16 can be thinner and lighter in weight than those previously used. Optionally, however, if direct bonding between the body panel 12 and the window panel 16 is also desired, the window gasket member 18 may optionally be formed with a channel-shaped opening 24 extending therethrough in order to allow a suitable adhesive to bond the window panel 16 directly to the recessed portion 14. Such optional channel-shaped opening 24 may consist of either a single opening extending continuously throughout the entire window gasket member 18, or a series of discrete channel-shaped openings at spaced locations throughout the window gasket member.

As will become apparent from the discussion below, the window gasket member 18, which is preferably composed of urethane or a urethane-containing material, may also optionally include a coating of pigmented material either on its entire exterior surface, or on a predetermined portion thereof, as illustrated by reference numeral 26. Such coating of pigmented material can be applied to the window gasket member 18 during the molding process in order to provide a decorative stripe on its exterior surface, or to color the window gasket member in order to complement the color scheme of the vehicle.

The window gasket member 18 is preferably molded from a multi-constituent material, such as the preferred liquid urethane material for example. Such urethane material may be composed, for example, of a polyol resin constituent, an isocyanate constituent, and a catalyst. Examples of commercially-available polyol resins are manufactured by The Dow Chemical Company under the trademark Voranol® and by Texaco Chemical Company under the trademark

Thanol® SF-6503. Examples of commercial isocyanates are produced by The Upjohn Company under the trademark Isonate® 143L, Isonate® 181, Isonate® 191 and Isonate® 240, and also by Mobay Chemical Corporation under the trademarks Mondur® PF and Mondur® CD. An example of a suitable catalyst for such urethane material is marketed by Witco Chemical Company under the trademark Witco Fomrez® UL-28.

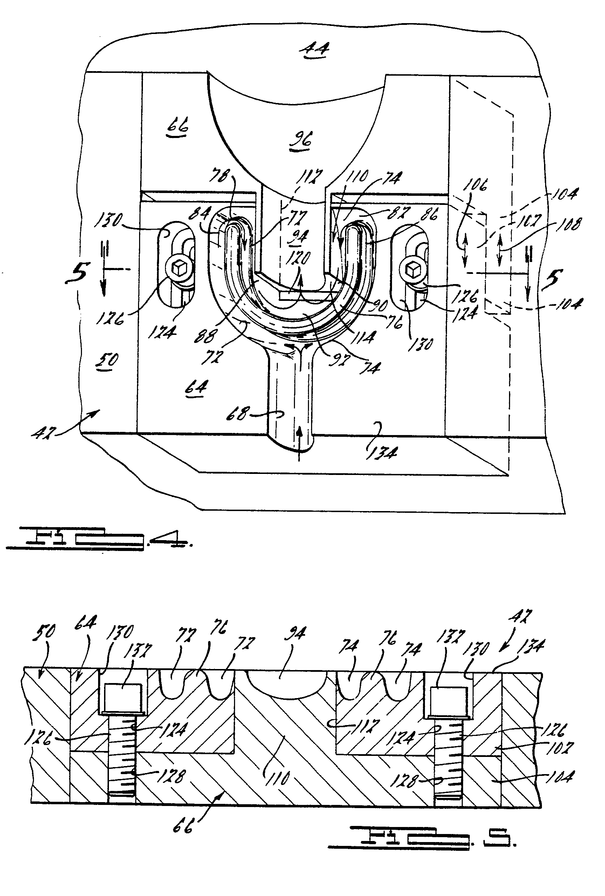

As illustrated schematically by the reaction injection molding system 30 in Figure 2, the constituents of the window gasket material are injected from two or more constituent sources 32 and 34 into a high-pressure mixing apparatus 36 by way of the respective metering devices 38 and 40. The constituents of the material are mixed in the high-pressure mixing apparatus 36 at pressures in the range of approximately 138 bar (2000 p.s.i.g.) to approximately 207 bar (3000 p.s.i.g.) and are conveyed to an aftermixer and gating apparatus 42. As discussed below, the aftermixer and gating apparatus 42 further mixes the constituents of the gasket material and reduces its pressure to a range of approximately 2 bar (30 p.s.i.g.) to approximately 6.9 bar (100 p.s.i.g.), and preferably approximately 3.4 bar (50 p.s.i.g.), before introducing the material into a mold cavity 44 of a mold apparatus 46.

Prior to the injection of the multi-constituent gasket material into the mold apparatus 46, the mold cavity is preferably coated with any of a number of known mold release agents, which typically consist of low-melting point waxes or silicon oils, for example. Commercial examples of mold release agents are produced by Contour Chemical Company under the trademark Kraxo® 1711, Exitt® II, Trulease® 125, Lifft® and Nonstickenstoffe®, by Frekote Inc. under the trademarks Frekote® 34, Frekote® 34H, Frekote® 31, and Frekote® 31H, and by Park Chemical Company under the name PRC789. The volatile mold release agent is then allowed to at least partially flash off of the mold apparatus which is typically at a temperature in the range of approximately 43°C (110°F) to approximately 71°C (160°F).

If desired, all of the mold cavity surface, or a predetermined portion thereof, may be coated with a pigmented material so that the pigmented material will be transferred in the mold to the desired surface or surfaces of the gasket or other molded article during the reaction injection molding process. An example of such pigmented material coating is manufactured by Sherwin Williams Company under the trademark Polane®. After the pigmented material coating has been allowed to flash off, the window panel 16 (glass or other transparent material) is positioned in the mold, adhesive means is applied as described below, and the mold members 48 and 50 of the mold apparatus 46 are closed, substantially in mutual engagement with one another. The constituents of the gasket material are injected into the system, mixed and introduced into the mold cavity 44 as described above, and the window panel 16 with the window gasket 18 integrally molded thereon is then removed.

As is known to those skilled in the reaction injection molding art, the intermixed constituents of the molding material undergo a rapid and highly exothermic reaction in the mold cavity and are approximately 70% cured within a very short time, generally less than one to six minutes, depending upon the catalyst employed. After such time, the molded article may be removed from the molding apparatus and allowed to cool at ambient temperatures.

As illustrated in Figure 3, at least one, and preferably both, of the mold members 48 and 50 include an elongated elastomeric bead member 56 compressingly seated within a corresponding groove 58. The grooves 58 are positioned generally adjacent the peripheral edges of the mold cavity 44 so that the elastomeric members 56 compressingly engage and sealingly support either the opposite mold member or the window panel 16 and also substantially prevent or minimize flashing of the molding material out from the mold cavity 44. When the mold apparatus is open, the elastomeric members 56 preferably protrude slightly from their associated grooves 58 so that the force required to hold the mold members 48 and 50 together in a sealing engagement is substantially reduced from the force that would be necessary if the mold members were required to be forced into direct contact with one another. Similarly, a significantly reduced pressure is exerted on the window panel 16 and consequently the frequency of breakage of the window panels is substantially minimized or eliminated. Such reduction results in the force required to hold the mold members together also being significantly less than that required in conventional compression and injection molding processes. Additionally, the elastomeric members 56 are sufficiently flexible to allow for minor variations in the shape and contour of the window panels and thereby sealingly isolate the mold cavity 44 regardless of such minor window panel variations.

As mentioned above, the preferably urethane window gasket member 18 is securely bonded to the preferably glass window panel 16 during the molding process. Prior to the injection or other introduction of the constituents of the gasket material into the mold recesses or cavity 18, the glass panel 16, or at least its peripheral portion or portions 17, are cleaned to remove grease, release agents, or other residue or debris, preferably with an alkaline wash. If, however, the glass is already relatively clean and free of release agents, a solvent wipe, of methylene chloride, for example, is applied.

Next a silane-containing material is applied, at least to the peripheral portions 17, and allowed to flash off for a period of approximately ten seconds to approximately thirty seconds. As is known to those skilled in the art, the exact time depends upon factors such as the mold temperature and the particular material used, for example.

The peripheral portions 17 are then wiped to prevent the glass, or other transparent material, from clouding.

Prior to inserting the window panel 16 into the mold cavity 44, a primer material 15 is applied by wiping or spraying to at least one side of the peripheral portion 17. A preferred example of the primer material 15 is Betaseal® glass and metal primer 435.21, as manufactured by Essex Chemical Corporation, Speciality Chemicals Division. "Betaseal" is a registered trademark of Essex Chemical Corporation. The primer 15 is air-dried for approximately two minutes to approximately three minutes. The gasket material constituents are then injected or introduced into the mold cavity 44, which must be done within approximately 30 minutes after the primer is applied. The gasket member 18 is then molded as described above, and a strong adhesive and intermolecular bond is achieved.

It should be noted that although the primer 15 may alternately be applied to one or more of the opposite sides and/or edge of the peripheral portion 17, in actually-constructed prototypes of the modular window assembly, the gasket members 18 have been molded with the primer 15 on only one side of their peripheral portions 17 and have been shown to exhibit an extremely strong and secure bond. Thus such single-sided application of the primer 15 is preferred in order to preserve materials and to minimize the handling of the glass panel members 16, thereby minimizing the potential for breakage and waste.

Figures 4 and 5 illustrate an improved aftermixer and gating apparatus 42, generally including an aftermixer block or body 64 and a gating block or body 66 positioned in one or the other of the mold members 48 or 50 for further mixing the constituents of the gasket material and admitting the material to the mold cavity 44.

The aftermixer body 64 includes at least one common inlet passageway 68 for receiving the gasket material from the high-pressure mixing apparatus 36 at a predetermined flow rate and pressure. The gasket material flows through the inlet passageway 68 into at least a pair of curvilinear mixing passageways 72 and 74 where it is separated into a corresponding number of flow streams. Such separation increases the turbulence of the gasket material flow and accordingly enhances the intermixing of its constituents. The mixing passageways 72 and 74 include a divider wall 76 therein, which form a generally serpentine path in the mixing passageways. Such serpentine path includes at least one bight portion 78 in the mixing passageway 72 and a similar bight portion 82 in the mixing passageway 74. Such bight portions cause the gasket material to substantially reverse its direction of flow, as indicated by the flow arrows 84 and 86, respectively, in order to increase the turbulence of each of the gasket material flow streams and hence the intermixing of the constituents therein.

Once the gasket material flows through the mixing passageways 72 and 74, it enters a corresponding number of respective inlet openings 88 and 90 of at least one common mixing cavity 92. The flow streams from the mixing passageways are reunited in the mixing cavity 92, which again reverses the flow directions of the flow streams, increases their turbulence, and enhances the intermixing of the gasket material constituents. The reunited and intermixed gasket material from the mixing cavity is received by the inlet passageway 94 in the gating body, wherein it is conveyed through a diverging fan-gate passageway 96 to the mold cavity 44.

The aftermixer body 64 preferably includes a stepped or offset portion 102 adapted to slidingly engage a preferably corresponding stepped or offset portion 104 on the gating body 66, such that the aftermixer body 64 and the gating body 66 may be slidably and adjustably moved toward or away from one another as indicated by the arrows 106 and 108. The gating body 66 also includes an integrally-formed tongue portion 110 in which the gating inlet passageway 94 is formed. The tongue portion 110 is slidably received in a slot 112 in the aftermixer body 64 for slidable and adjustable movement therein as the aftermixer and gating bodies are adjustably moved as described above. The end portion 114 of the tongue portion 110 defines the exit portion of the mixing cavity 92 such that selective movement of the tongue portion 110 in the slot 112 allows the sizes of the mixing cavity 92 and its inlet openings 88 and 90 to be selectively altered as the aftermixer and gating bodies are selectively and adjustably moved. Thus the sizes of the mixing cavity and its inlet openings may be selectively and adjustably increased as the aftermixer and gating bodies are moved apart from one another, and correspondingly such sizes may be selectively and adjustably decreased as the aftermixer and gating bodies are moved toward one another. In order to fill the unoccupied gap in the slot 112 in the aftermixer body 64 after the aftermixer body has been adjustably moved away from the gating body 66, one or more shim members 120 are removably insertable into the slot adjacent the end portion 114 of the tongue 110.

The aftermixer body 64 is preferably provided with one or more elongated openings 124 therethrough for receiving a threaded fastener 126 extending therethrough. The threaded fastener is adapted to threadably engage a threaded aperture 128 in the gating body 66 and serves as a locking means for fixing a preselected position of the tongue portion 110 in the slot 112. Preferably, the aftermixer body 64 is also provided with countersunk portions 130 for allowing the head portions 132 of the fasteners 126 in a recessed relationship with the surface 134 of the aftermixer body 64.

The above-described selective adjustments to the size of the mixing cavity 92 and its inlet openings 94 and 96 allow for the selective alteration of the back-pressure exerted by the aftermixer and gating apparatus 42 on the gasket material flowing therethrough. Such alteration thereby allows for the selective optimization of the intermixing of the constituents of the gasket material for a predetermined flow rate and pressure of the material from the high-pressure mixing apparatus 36 shown schematically in Figure 2. By such adjustments, therefore, the user of the reaction injection molding system may "fine-tune" the process to achieve optimum intermixing and reaction of the constituents of the molding material as well as achieving greater control over the pressure at which the molding material is introduced into the mold cavity.

**Claims**

1. A method of molding and bonding a window gasket member (18) onto a peripheral portion of a glass window panel (16) in a mold cavity (44) of an injection molding system (46), said method comprising positioning said glass window panel (16) in a mold apparatus (48, 50) defining said mold cavity (44) with said peripheral portion (17) extending into said mold cavity and closing said mold apparatus; conveying said molding material through a gating device (42) into said mold cavity; and removing said glass window panel (16) from said mold cavity with said gasket member (18) molded and bonded thereon after said molding material has at least partially cured in said mold cavity, characterised in that the molding material is a multi-constituent urethane material, in that at least a preselected portion (17) of said window panel (16) is first cleaned and then has a primer (15) applied thereto before being positioned in the mold cavity (44), and in that the constituents of said urethane material are injected under pressure into mixing means (36) at a predetermined flow rate before being conveyed therefrom to the gating device (42).

2. A method according to claim 1, characterised in that said glass panel (16) is inserted into said recessed portion (44) of said mold-like member (48, 50) so that when said urethane material is introduced into said recessed portion said urethane material contacts only said preselected portion (17) of said glass panel.

3. A method according to claim 1 or 2, characterised in that said cleaning step comprises cleaning at least said preselected portion (17) with an alkaline-containing material.

4. A method according to claim 1 or 2, characterised in that said cleaning step comprises wiping at least said preselected portion (17) with a methylene chloride solvent.

5. A method according to any preceding claim, characterised in that a silane-containing material is applied to at least said preselected portion (17) of said glass panel prior to applying said primer thereto.

6. A method according to claim 5, characterised in that said silane-containing material is allowed to flash off said preselected portion (17) and then said preselected portion is wiped prior to said primer (15) being applied thereto.

7. A method according to any preceding claim, characterised in that at least a predetermined portion of said mold cavity (44) is coated with a pigmented material before said mold apparatus is closed, said pigmented material subsequently transferring to at least a corresponding predetermined portion of said gasket member (18).

8. A method according to any preceding claim, characterised in that said window panel (16), when positioned in the mold apparatus, is sealingly supported between flexible portions (56) of said molding apparatus.

9. A method according to claim 8, characterised in that the flexible portion of the molding apparatus comprises elastomeric members (56) which are sufficiently flexible as to allow for minor variations in the shape or contour of the window panel (16).

10. A method according to claim 9, characterised in that an elastomeric member (56) is also provided between the mold parts (48, 50) to define the outer periphery of the mold cavity (44).

11. A method according to any preceding claim, characterised in that the pressurised material is injected from the mixing means (36) into an aftermixer device (42) in which said material is separated into at least a pair of generally serpentine flow streams (84, 86) before being reunited in a mixing cavity (92) prior to supply to the gating device (66).

**Patentansprüche**

1. Verfahren zur Formung und Aufklebung eines Fensterdichtungsteiles (18) an den Randabschnitt einer Glasfensterscheibe (16) in einem Formhohlraum (44) eines Einspritzformsystems (46) mit folgenden Verfahrensschritten:

Positionieren der Glasfensterscheibe (16) in einer Formvorrichtung (48, 50), die den Formhohlraum (44) bildet, wobei sich der Randabschnitt (17) in den Formhohlraum hineinerstreckt und Schließen der Formvorrichtung;

Befördern des Formmaterials durch eine Angußvorrichtung (42) in den Formhohlraum; und

Entfernen der Glasfensterscheibe (16) mit dem daran angeformten und damit verklebten Dichtungsteil (18) aus dem Formhohlraum, nachdem das Formmaterial zumindest teilweise in Formhohlraum ausgehärtet ist, dadurch gekennzeichnet,

daß das Formmaterial ein vielbestandteiliges Urethanmaterial ist,

daß zumindest ein vorgewählter Abschnitt (17) der Fensterscheibe (16) zuerst gereinigt und dann eine Grundierung (15) darauf aufgebracht wird, bevor sie im Formhohlraum (44) positioniert wird, und

daß die Bestandteile des Urethanmaterials unter Druck in eine Mischeinrichtung (36) mit einer vorbestimmten Flußrate eingespritzt werden, bevor sie daraus zur Angußvorrichtung (42) befördert werden.

2. Verfahren nach Anspruch 1, dadurch gekennzeichnet, daß die Glasscheibe (16) in den besagten zurückspringenden Abschnitt (44) des formähnlichen Teils (48, 50) eingesetzt wird, so daß, wenn das Urethanmaterial in den besagten zurückspringenden Abschnitt eingeführt wird, das Urethanmaterial nur mit dem vorgewählten Abschnitt (17) der Glasscheibe in Kontakt kommt.

3. Verfahren nach Anspruch 1 oder 2, dadurch gekennzeichnet, daß der Reinigungsschritt ein Reinigen zumindest des vorgewählten Abschnittes (17) mit einem basenhaltigen Material umfaßt.

4. Verfahren nach Anspruch 1 oder 2, dadurch gekennzeichnet, daß der Reinigungsschritt ein Abwischen zumindest des vorgewählten Abschnittes (17) mit einem Methylenchlorid-Lösungsmittel umfaßt.

5. Verfahren nach einem der vorgenannten Ansprüche, dadurch gekennzeichnet, daß ein Silan-haltiges Material auf zumindest den vorgewählten Abschnitt (17) der Glasscheibe aufgebracht wird, bevor darauf die Grundierung aufgebracht wird.

6. Verfahren nach Anspruch 5, dadurch gekennzeichnet, daß dem Silan-haltigen Material erlaubt wird, den vorgewählten Abschnitt (17) zu überspülen, wonach der vorgewählte Abschnitt abgewischt wird, bevor die Grundierung (15) darauf aufgebracht wird.

7. Verfahren nach einem der vorgenannten Ansprüche, dadurch gekennzeichnet, daß zumindest ein vorbestimmter Abschnitt des Formhohlraums (44) mit einem pigmentierten Material beschicht wird, bevor die Formvorrichtung geschlossen wird, wodurch sich das pigmentierte Material darauffolgend auf zumindest einen entsprechenden, vorgewählten Abschnitt des Dichtungsteiles (18) überträgt.

8. Verfahren nach einem der vorgenannten Ansprüche, dadurch gekennzeichnet, daß die Fensterscheibe (16), wenn sie in der Formvorrichtung positioniert wird, abdichtend zwischen flexiblen Abschnitten (56) der Formvorrichtung gehalten wird.

9. Verfahren nach Anspruch 8, dadurch gekennzeichnet, daß der flexible Abschnitt der Formvorrichtung elastische Teile (56) umfaßt, die genügend flexibel sind, um geringfügige Variationen in der Form oder Kontur der Fensterscheibe (16) zu erlauben.

10. Verfahren nach Anspruch 9, dadurch gekennzeichnet, daß ein elastisches Teil (56) auch zwischen den Formteilen (48, 50) vorgesehen ist, um den äußeren Rand des Formhohlraumes (44) zu bilden.

11. Verfahren nach einem der vorgenannten Ansprüche, dadurch gekennzeichnet, daß das unter Druck stehende Material aus der Mischeinrichtung (36) in eine Nachmischvorrichtung (42) eingespritzt wird, in der das Material in zumindest ein Paar von im allgemeinen serpentinenförmigen Flußströmen (84, 86) aufgeteilt wird, bevor es in einer Mischkammer (92) vor der Zuführung in die Angußvorrichtung (66) wiedervereinigt wird.

## Revendications

1. Procédé pour mouler et coller un joint de fenêtre (18) sur une portion périphérique d'un panneau de fenêtre en verre (16) dans une cavité de moule (44) d'un système de moulage par injection (46), ce procédé consistant à positionner le panneau de fenêtre en verre (16) dans un appareil de moulage (48, 50) définissant cette cavité de moule (44) avec la portion périphérique (17) s'étendant dans la cavité de moule et fermant cet appareil de moulage, à transporter le matériau de moulage à travers un dispositif d'introduction (42) dans la cavité du moule et à retirer le panneau de fenêtre en verre (16) de la cavité du moule avec le joint (18) moulé et collé sur lui après que le matériau de moulage a au moins partiellement pris dans la cavité du moule, caractérisé en ce que le matériau de moulage est un matériau à base d'uréthane à plusieurs constituants, en ce qu'au moins une portion présélectionnée (17) du panneau de fenêtre (16) est d'abord nettoyée et qu'on lui applique ensuite une couche d'impression (15) avant de la positionner dans la cavité du moule (44) et en ce que les constituants du matériau à base d'uréthane sont injectés sous pression dans des moyens de mélange (36) à un débit prédéterminé avant d'en être transportés dans le dispositif d'introduction (42).

2. Procédé selon la revendication 1, caractérisé en ce que le panneau de verre (16) est introduit dans la portion creuse (44) de l'élément analogue à un moule (48, 50) de telle sorte que, lorsque le matériau à base d'uréthane est introduit dans cette portion en creux, il est en contact seulement avec cette portion présélectionnée (17) du panneau de verre.

3. Procédé selon la revendication 1 ou la revendication 2, caractérisé en ce que le stade de nettoyage consiste à nettoyer au moins cette portion présélectionnée (17) avec une substance contenant un alcali.

4. Procédé selon la revendication 1 ou la revendication 2, caractérisé en ce que le stade de nettoyage consiste à essuyer au moins cette portion présélectionnée (17) avec un solvant à base de chlorure de méthylène.

5. Procédé selon l'une quelconque des revendications précédentes, caractérisé en ce qu'on applique un matériau contenant du silane sur au moins cette portion présélectionnée (17) du panneau de verre avant de lui appliquer la couche d'impression.

6. Procédé selon la revendication 5, caractérisé en ce qu'on laisse le matériau contenant du silane s'évaporer à l'extérieur de la portion présélectionnée (17) et qu'ensuite cette portion présélectionnée est essuyée avant d'y appliquer la couche d'impression (15).

7. Procédé selon l'une des revendications précédentes, caractérisé en ce qu'au moins une portion prédéterminée de la cavité du moule (44) est revêtue d'un matériau pigmenté avant de fermer le moule, ce matériau pigmenté étant ensuite transféré sur au moins une portion prédéterminée correspondante du joint (18).

8. Procédé selon l'une des revendications précédentes, caractérisé en ce que, lorsqu'il est positionné dans l'appareil de moulage, le panneau de fenêtre (16) est supporté de façon étanche entre des portions flexibles (56) de l'appareil de moulage.

9. Procédé selon la revendication 8, caractérisé en ce que la portion flexible de l'appareil de moulage comporte des éléments élastomères (56) qui sont suffisamment flexibles pour tenir compte de petites variations dans la forme ou dans le contour du panneau de fenêtre (16).

10. Procédé selon la revendication 9, caractérisé en ce qu'on prévoit également un élément élastomère (56) entre les parties du moule (48, 50) pour délimiter la périphérie extérieure de la cavité de moule (44).

11. Procédé selon l'une des revendications précédentes, caractérisé en ce que le matériau pressurisé est injecté depuis les moyens de mélange (36) dans le dispositif de post-mélange (42) dans lequel le matériau est séparé en au moins deux courants fluides généralement sinueux (84, 86) avant d'être réunis dans une cavité de mélange (92) avant d'arriver au dispositif d'introduction (66).

FIG. 1.

FIG. 2.

FIG. 3.

FIG. 4.

FIG. 5.

2